# FASCICULE DE BREVET EUROPEEN

(11) **EP 3 555 014 B1**
(45) Date de publication et mention de la délivrance du brevet: **06.09.2023**
(21) Numéro de dépôt: 17825573.3
(22) Date de dépôt: 12.12.2017
(51) Int. Cl.: C03C 27/10, B23K 26/00, C03C 17/06, C03C 17/23

(54) **VITRAGE FEUILLETE AYANT UNE COUCHE ELECTROCONDUCTRICE A LIGNE D'ABLATION DONT LES BORDS SONT EXEMPTS DE BOURRELET ET EN PENTE DOUCE**
VERBUNDGLASSCHEIBE MIT EINER ELEKTRISCH LEITENDEN SCHICHT MIT EINER ABLATIONSLINIE, DEREN KANTEN WULSTFREI UND LEICHT GENEIGT SIND
LAMINATED GLAZING HAVING AN ELECTRICALLY CONDUCTIVE LAYER WITH AN ABLATION LINE, THE EDGES OF WHICH ARE FREE OF BEADS AND GENTLY SLOPED

(30) Priorité: 14.12.2016 FR 1662422
(43) Date de publication de la demande: 23.10.2019
(73) Titulaire: SAINT-GOBAIN GLASS FRANCE, 92400 Courbevoie (FR)
(72) Inventeur: Legois, Vincent, 45110 Germigny des Prés (FR); Rachet, Vincent, 45590 Saint-Cyr en Val (FR); Tondu, Thomas, 45600 Sully (FR)
(74) Mandataire: Saint-Gobain Recherche
(86) Numéro de dépôt international: PCT/FR2017/053522
(87) Numéro de publication internationale: WO 2018/109364

(56) Documents cités:
- EP-A1- 0 353 141
- EP-A1- 0 893 938
- EP-A1- 2 591 638
- EP-A2- 0 936 022
- EP-B1- 2 591 638
- WO-A1-2010/080233
- WO-A1-2017/001792
- FR-A1- 2 888 082
- US-A1- 2016 174 295

## Description

L'invention appartient au domaine des vitrages chauffants (fonction antigivre ou antibuée), notamment aéronautiques (avion et hélicoptère) utilisant une couche mince conductrice et transparente.

Les vitrages aéronautiques chauffants sont des feuilletés de deux ou trois plis verriers (minéraux) ou organiques. La prévention de l'apparition de givre sur les vitrages aéronautiques peut se faire par chauffage par effet joule au moyen d'une couche mince transparente et électroconductrice. Pour des surfaces de formes non rectangulaires, la couche chauffante est déposée avec des hétérogénéités de résistance de surface (fonction de l'épaisseur déposée), appelé aussi gradient de Rcarré, afin de limiter l'hétérogénéité de densité de puissance surfacique (on ne sait chauffer uniformément que des rectangles). Lorsque la géométrie de la surface chauffante est complexe, ce gradient devient très difficile à réaliser : la solution consiste alors à faire de nombreuses lignes de flux (au moyen d'un laser par exemple). Cela revient à découper la couche en de multiples bandes conductrices de largeur inférieure à 40mm et séparées par des lignes isolantes (sans couche) et très étroites (entre 40 microns et 250 microns). Ces lignes rapprochées permettent de guider le courant, de limiter les écarts de densité de puissance à l'intérieur de chaque bande et ainsi de mieux chauffer toute la surface (disparition des zones froides).

La demande US 2010/0159251 A1 décrit une ablation de lignes de flux de 48, respectivement 16 µm de large dans une couche électroconductrice au moyen d'un laser YAG 355 nm. Les lignes d'ablation décrites dans la demande US 2013/0082043 A1 ont une épaisseur au plus égale à 400, de préférence 50 µm.

La demande WO 2007 003849 A2 décrit la formation de couches chauffantes par pyrolyse, pulvérisation cathodique assistée par magnétron..., et l'ablation dans de telles couches, de lignes de flux de 100 à 200 µm de largeur ainsi que de lignes de séparation de phases de 500 µm à 2 mm de largeur (utilisation de courant triphasé) au moyen d'un laser pulsé Nd-YAG 1064 nm.

WO2017001792 A1 décrit un vitrage feuilleté, sur lequel une mince couche conductrice est déposée, comprenant des lignes de flux.

Cependant l'aspect esthétique (visibilité dans certaines conditions d'observations) de ces lignes d'ablation et la géométrie des bords d'ablation à l'échelle nanoscopique ne sont jamais abordés.

Les surfaces chauffantes étant de plus en plus grandes, le nombre de lignes de flux augmente progressivement. De plus, la distance entre les bus-bars étant de plus en plus grande, l'épaisseur de la couche déposée augmente elle aussi et les lignes deviennent de plus en plus visibles. Dans certaines conditions de vol, la présence de ces lignes peut être très perturbante pour les pilotes d'avions.

La géométrie des bords de l'ablation a une influence très importante sur la visibilité des lignes, notamment dans des conditions d'observations nocturnes (champ sombre) en présence de sources lumineuses ponctuelles et intenses.

Les techniques actuelles d'ablation laser utilisent des impulsions lasers de l'ordre de nano-secondes dont la fréquence, la puissance et la longueur d'onde sont variables d'une machine à une autre. Pour les couches minces transparentes et conductrices déposées sur verre, ces lasers ne permettent pas d'obtenir des ablations « nettes » : il reste sur les deux bords des lignes, dans la zone dite « affectée thermiquement », des bourrelets (surépaisseurs) de matière fondue qui ont en général une hauteur égale à l'épaisseur du dépôt.

Ce bourrelet est visible dans certaines conditions d'éclairage et d'observations et plus sa hauteur augmente, plus il devient visible.

Les inventeurs se sont aperçus que la géométrie des bords d'ablation a une influence très importante sur le mécanisme d'apparition des lignes de flux et sur la détection visuelle de ces lignes dans les conditions particulières décrites précédemment.

Ces lignes sont visibles en réflexion lorsque la distance d'observation est faible (inférieure à 500mm) et lorsque la couche est suffisamment épaisse (changement de couleur notable entre la zone sans couche et la zone avec couche). A plus grande distance (> 500mm), elles deviennent invisibles en réflexion.

A faible distance, en transmission et en champ clair (ciel bleu par exemple), plus la couche est mince, plus la ligne de flux est difficile à détecter car la variation locale de la transmission lumineuse est faible. Lorsque la distance augmente, elles sont encore plus difficiles à détecter.

Cependant, en transmission et en champ sombre, lorsque la couche a une épaisseur supérieure à 150 nm, il existe quelques cas où la lumière fait ressortir assez nettement ces lignes : lumière intense ponctuelle + angle d'incidence supérieur à 45° ou lumière diffuse intense (par exemple ciel nuageux et observation des lignes sur fond noir).

A cet effet, l'invention a pour objet un vitrage feuilleté comprenant, de sa première face destinée à être orientée vers l'atmosphère extérieure, vers sa seconde face, un premier pli de 0,5 à 12 mm d'épaisseur, un premier pli structurel de 3 à 20 mm d'épaisseur, éventuellement un ou plusieurs autres plis structurels de 3 à 20 mm d'épaisseur, et éventuellement un second pli de 0,5 à 12 mm d'épaisseur constituant la seconde face du vitrage, dont au moins la face du premier et/ou du second pli de 0,5 à 12 mm d'épaisseur orientée vers le(s) pli(s) structurel(s), et/ou au moins une face de ce(s) dernier(s) comprend une couche électroconductrice d'épaisseur comprise entre 2 et 1600 nm, excepté sur au moins une ligne d'ablation, caractérisé en ce que les bords de cette ligne ne présentent aucun bourrelet, et en ce que leur pente moyenne est au plus égale à 5 %, en ce que la largeur de la ligne d'ablation est comprise entre 40 et 250 µm ou entre 0,5 et 2 mm, en ce que le vitrage comprend plusieurs lignes d'ablation de largeur comprise entre 40 et 250 µm sensiblement parallèles et équidistantes, et en ce que la distance entre deux de ces lignes d'ablation voisines est au moins égale à 8 mm, et au plus égale à 40, et par ordre de préférence croissant, 25 et 20 mm.

En modifiant la géométrie des bords, en les « structurant », les inventeurs ont montré qu'il est possible de rendre les lignes de flux nettement plus difficiles à détecter visuellement.

Cette structuration permet de supprimer les bourrelets présents sur les bords d'ablation mais surtout de modifier la pente de ces bords. Un paramètre important qui permet de différencier les lignes fortement visibles en champ sombre des lignes faiblement visibles est la pente moyenne. Celle-ci correspond à la pente de la droite reliant la surface du verre (fond d'ablation) et la surface de la couche. Sa valeur en % est égale à 100 X tangente α (angle de la pente moyenne du bord par rapport au plan du substrat). Pour des valeurs de pente moyenne au plus égales à 5%, les lignes sont très peu visibles. Plus cette valeur augmente, plus les lignes sont visibles. L'important est d'obtenir une variation très progressive de l'épaisseur de la couche de chaque côté de la ligne de flux.

La forme des bords peut être rectiligne ou courbe (circulaire, elliptique, parabolique...).

Un test « simple » pour vérifier l'effet de la structuration des bords sur la visibilité des lignes consiste à observer la surface ablatée en champ sombre en l'éclairant avec une lumière intense et annulaire arrivant sur cette surface avec un angle d'incidence de 45° (ou plus).

Une ligne d'ablation peut ici consister en une bande isolante électriquement de 1 à 5 mm de large, refermée sur elle-même de façon à délimiter la périphérie d'une zone chauffante.

La structuration des bords d'ablation permet :
- de rendre les lignes d'ablation invisibles (ou moins visibles dans le cas de couches très épaisses) quelles que soient les conditions d'observations ;
- d'augmenter le nombre de lignes de flux par unité de surface ;
- d'améliorer l'homogénéité du chauffage ;
- de réduire la puissance électrique nécessaire pour le dégivrage/désembuage des vitrages.

Conformément à des caractéristiques du vitrage feuilleté de l'invention :
- la largeur de la ligne d'ablation, appelée ligne de flux, est comprise entre 40 et 250 µm ; on entend ici par largeur celle du fond d'ablation ;
- le vitrage feuilleté comprend plusieurs lignes de flux sensiblement parallèles et équidistantes, et la distance entre deux lignes de flux voisines est au moins égale à 8 mm, et au plus égale à 40, et par ordre de préférence croissant, 25 et 20 mm ; cette distance définit la largeur des bandes électroconductrices ;
- la largeur de la ligne d'ablation, appelée ligne de séparation de phase, est comprise entre 0,5 et 2 mm ;

Conformément à des caractéristiques préférées du vitrage feuilleté de l'invention :
- lorsque la couche chauffante du vitrage est alimentée en courant triphasé, il y a deux telles lignes de séparation de phase ; malgré la largeur de celles-ci, leur visibilité décroit grâce aux mesures de l'invention, et leur vision est beaucoup moins gênante dans les conditions d'utilisation, telles que celles d'un vol de jour ou de nuit ;
- chaque ligne d'ablation coupe sensiblement orthogonalement deux bandes d'amenée de courant disposées le long de deux côtés opposés du vitrage, et présente une courbure et éventuellement une inflexion lorsque ces deux côtés opposés forment un angle entre eux ou lorsque les deux extrémités de la ligne d'ablation ne sont pas en face l'une de l'autre, mais décalées l'une par rapport à l'autre ; cette géométrie favorise l'homogénéité de chauffage sur toute la surface du vitrage quand celle-ci est complexe et s'écarte de la géométrie d'un rectangle ; ainsi évite-t-on des zones froides, éventuellement mal ou non dégivrées ou désembuées ;
- la pente moyenne des bords de la ligne d'ablation est au plus égale à 2 % ;
- le(s) pli(s) de 0,5 à 12 mm d'épaisseur est (sont) en verre renforcé chimiquement ;
- le(s) pli(s) structurel(s) est (sont) en verre semi-trempé thermiquement ou renforcé chimiquement, ou en matériau polymère tel que poly(méthacrylate de méthyle), polycarbonate ou poly(téréphtalate d'éthylène) ;
- la couche électroconductrice consiste en une couche d'oxyde d'indium dopé à l'étain (ITO), oxyde d'étain dopé au fluor (SnO₂ :F) ou oxyde de zinc dopé à l'aluminium (AZO), ou en une couche métallique telle que d'or ou d'argent ;
- le(s) pli(s) de 0,5 à 12 mm d'épaisseur et le(s) pli(s) structurel(s) sont collés deux à deux par une couche adhésive intercalaire consistant chacune, indépendamment l'une de l'autre, en une couche de polyvinylbutyral (PVB), polyuréthane (PU) ou poly(éthylène-acétate de vinyle) (EVA) de 0,5 à 20, de préférence 1 à 16 mm d'épaisseur.

L'invention a également pour objet un procédé de fabrication d'un vitrage feuilleté tel que décrit ci-dessus, caractérisé en ce qu'au moins un pli de 0,5 à 12 mm d'épaisseur ou au moins un pli structurel, dont une face comprend une couche électroconductrice d'épaisseur comprise entre 2 et 1600 nm, est soumis du côté de cette dernière, à une ablation laser par impulsions de durées au plus égales à 100, de préférence 20 et de manière particulièrement préférée 15 ps, et au moins égales à 2, de préférence 5 ps.

La réalisation des lignes de flux peut se faire par ablation laser, avec des lasers à impulsions de l'ordre de pico ou femto-secondes. Il est important que le tir laser soit effectué du côté de la couche électroconductrice ; en effet s'il était effectué du côté de la face du pli opposée à cette couche, l'ablation serait aisée, les bords seraient nets mais à pente plus importante, de l'ordre de 30 ° au lieu de 5 ° par exemple.

L'ablation laser peut être remplacée par une attaque chimique de la couche.

Comme il sera vu plus en détails dans la suite, il est possible de procéder en plusieurs étapes en faisant varier la largeur du motif (en réalisant des retraits partiels de la couche sur des largeurs de plus en plus faibles) et la profondeur de l'ablation. C'est intéressant pour augmenter la structuration des bords de l'ablation, notamment dans le cas de couches épaisses (> 800nm) et/ou pour diminuer l'angle des bords de la ligne d'ablation et réduire encore plus la visibilité de celle-ci.

Selon des caractéristiques préférées du procédé de l'invention :
- l'ablation est effectuée à une vitesse de déplacement du pli par rapport au laser de 10 à 600, de préférence 50 à 350 mm/s ; le laser, ou la tête laser pouvant être équipée d'un scanner, est également susceptible de se déplacer par rapport au pli de verre ou équivalent, qui peut alors être fixe ;
- un scanner est associé au laser de manière à déplacer le spot laser pour produire une ligne d'ablation relativement large, telle que de 0,5 à 2 mm de largeur ; le laser est déplacé sur la couche électroconductrice selon un motif (cercle, losange...) défini au moyen du scanner ; le déplacement de ce motif lui-même engendre une ligne continue d'une largeur égale à celle du motif.

L'invention a également pour objet l'application d'un vitrage feuilleté tel que décrit ci-dessus comme vitrage dégivrant et/ou désembuant utilisant une couche électroconductrice transparente pour un véhicule de transport aérien, terrestre notamment ferroviaire, aquatique notamment marin, blindé civil ou militaire.

L'invention sera mieux comprise à la lumière de l'exemple de réalisation suivant, en référence aux représentations schématiques ci-jointes dans lesquelles
- les Figures 1 à 4 représentent des géométries différentes de bords de lignes d'ablation ainsi que la pente moyenne de ces bords pour les trois premières de ces figures ;
- les Figures 5 et 6, respectivement 7 à 9 illustrent un premier, respectivement un second modes de réalisation du procédé de l'invention.

Sur chacune des neuf Figures, un pli 1 de verre renforcé chimiquement de 3 mm d'épaisseur est muni d'un revêtement 2 d'oxyde d'indium dopé à l'étain (ITO) de 300 nm d'épaisseur.

Le revêtement 2 est exempt conformément à une ligne dont le fond d'ablation 3 a une largeur de 80 µm.

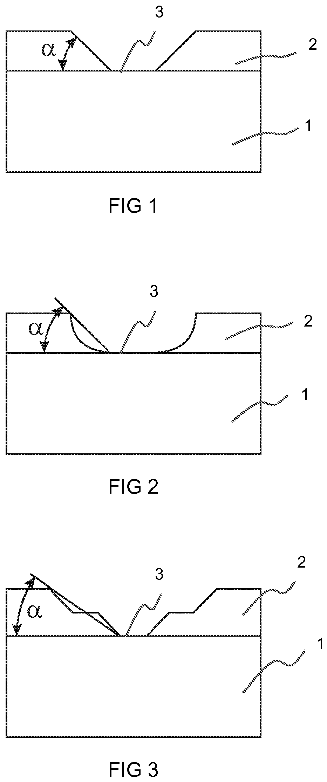

Sur les Figures 1 à 3 est représentée la pente moyenne d'angle α qui, conformément à l'invention, doit être au plus égale à 5 %.

Aucun bord de ces lignes d'ablation ne présente de bourrelet ou surépaisseur de hauteur correspondant à l'épaisseur de matière fondue par l'ablation.

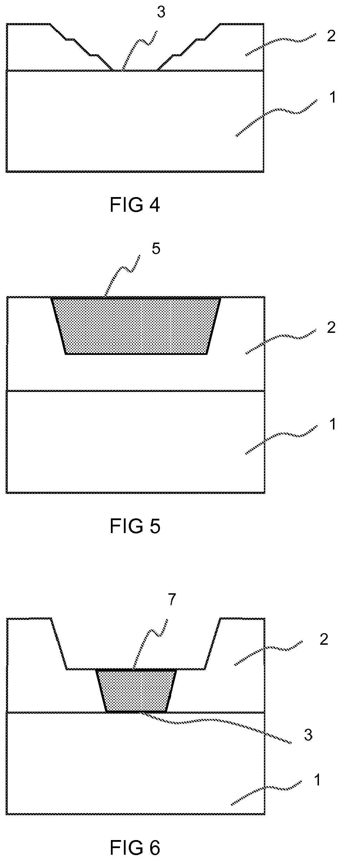

Les Figures 1, 3 et 4 représentent des bords d'ablation rectilignes obliques, à simple (Figure 3) ou double (Figure 4) gradin. La Figure 2 représente des bords d'ablation courbes.

Deux procédés sont décrits ici.

On utilise un laser commercialisé par la Société Trumpf sous la référence commerciale TruMicro 5070 et de caractéristiques suivantes :
Longueur d'onde 1030 nm
Puissance moyenne 100 W
Fréquence 400 - 600 kHz
Energie d'impulsion inférieure à 250 µJ
Impulsions inférieures à 10 ps.

Dans un premier procédé, deux étapes sont représentées aux Figures 5 et 6.

Dans une première étape (Figure 5), on procède à une ablation partielle 5 selon une ligne de 200 - 300 µm de largeur sur une profondeur de 150 nm.

Pour cette première étape, le laser est réglé avec les paramètres suivants :
Focale 250 mm
Laser 50 kHz - énergie / impulsion 50 ou 60 µJ à ajuster
Motif circulaire de 250 µm défini par un scanner
Vitesse de scan 1250 mm/s
Laser fixe, vitesse du pli 100 mm/s.

Dans une deuxième étape (Figure 6), on procède à une seconde ablation totale 7 selon une ligne de fond d'ablation 3 de 80 µm de large comme déjà indiqué.

Pour cette seconde étape, le laser est réglé avec les paramètres suivants :
Focale 250 mm
Laser 25 kHz - énergie / impulsion 120 µJ
Pas besoin d'un scanner
Laser fixe, vitesse du pli 150 mm/s.

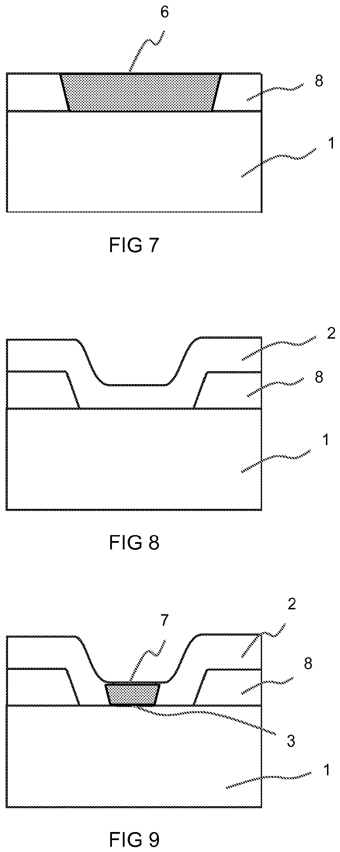

Un second procédé alternatif est représenté sur les Figures 7, 8 et 9.

Le pli 1 est ici muni au départ d'une couche 8 susceptible d'être retirée par ablation laser comme décrit précédemment. Il peut également s'agir d'une couche d'ITO.

Dans une première étape (Figure 7), on effectue une ablation totale 6 de la couche 8 conformément à une ligne.

Dans une seconde étape (Figure 8), on forme à la surface du produit de la première étape une couche d'ITO 2.

Dans la troisième et dernière étape, on effectue une ablation laser totale 7 de la couche 2 d'ITO selon un fond d'ablation 3 de 80 µm de large.

## Revendications

1. Vitrage feuilleté comprenant, de sa première face destinée à être orientée vers l'atmosphère extérieure, vers sa seconde face, un premier pli de 0,5 à 12 mm d'épaisseur, un premier pli structurel de 3 à 20 mm d'épaisseur, éventuellement un ou plusieurs autres plis structurels de 3 à 20 mm d'épaisseur, et éventuellement un second pli de 0,5 à 12 mm d'épaisseur constituant la seconde face du vitrage, dont au moins la face du premier et/ou du second pli de 0,5 à 12 mm d'épaisseur orientée vers le(s) pli(s) structurel(s), et/ou au moins une face de ce(s) dernier(s) comprend une couche électroconductrice d'épaisseur comprise entre 2 et 1600 nm, excepté sur au moins une ligne d'ablation, **caractérisé en ce que** les bords de cette ligne ne présentent aucun bourrelet, **en ce que** leur pente moyenne est au plus égale à 5 %, **en ce que** la largeur de la ligne d'ablation est comprise entre 40 et 250 µm ou entre 0,5 et 2 mm, **en ce que** le vitrage comprend plusieurs lignes d'ablation de largeur comprise entre 40 et 250 µm sensiblement parallèles et équidistantes, et **en ce que** la distance entre deux de ces lignes d'ablation voisines est au moins égale à 8 mm, et au plus égale à 40, et par ordre de préférence croissant, 25 et 20 mm.

2. Vitrage selon la revendication 1, **caractérisé en ce que** chaque ligne d'ablation coupe sensiblement orthogonalement deux bandes d'amenée de courant disposées le long de deux côtés opposés du vitrage, et présente une courbure et éventuellement une inflexion lorsque ces deux côtés opposés forment un angle entre eux ou lorsque les deux extrémités de la ligne d'ablation ne sont pas en face l'une de l'autre, mais décalées l'une par rapport à l'autre.

3. Vitrage selon l'une des revendications précédentes, **caractérisé en ce que** la pente moyenne des bords de la ligne d'ablation est au plus égale à 2 %.

4. Vitrage selon l'une des revendications précédentes, **caractérisé en ce que** le(s) pli(s) de 0,5 à 12 mm d'épaisseur est (sont) en verre renforcé chimiquement.

5. Vitrage selon l'une des revendications précédentes, **caractérisé en ce que** le(s) pli(s) structurel(s) est (sont) en verre semi-trempé thermiquement ou renforcé chimiquement, ou en matériau polymère tel que poly(méthacrylate de méthyle), polycarbonate ou poly(téréphtalate d'éthylène).

6. Vitrage selon l'une des revendications précédentes, **caractérisé en ce que** la couche électroconductrice consiste en une couche d'oxyde d'indium dopé à l'étain (ITO), oxyde d'étain dopé au fluor (SnO₂: F) ou oxyde de zinc dopé à l'aluminium (AZO), ou en une couche métallique telle que d'or ou d'argent.

7. Vitrage selon l'une des revendications précédentes, **caractérisé en ce que** le(s) pli(s) de 0,5 à 12 mm d'épaisseur et le(s) pli(s) structurel(s) sont collés deux à deux par une couche adhésive intercalaire consistant chacune, indépendamment l'une de l'autre, en une couche de polyvinylbutyral (PVB), polyuréthane (PU) ou poly(éthylène-acétate de vinyle) (EVA) de 0,5 à 20, de préférence 1 à 16 mm d'épaisseur.

8. Procédé de fabrication d'un vitrage feuilleté selon l'une des revendications précédentes, **caractérisé en ce qu'**au moins un pli de 0,5 à 12 mm d'épaisseur ou au moins un pli structurel, dont une face comprend une couche électroconductrice d'épaisseur comprise entre 2 et 1600 nm, est soumis du côté de cette dernière, à une ablation laser par impulsions de durées au plus égales à 100 ps.

9. Procédé selon la revendication 8, **caractérisé en ce que** les impulsions ont des durées au plus égales à 20, de préférence 15 ps.

10. Procédé selon l'une des revendications 8 ou 9, **caractérisé en ce que** les impulsions ont des durées au moins égales à 2, de préférence 5 ps.

11. Procédé selon l'une des revendications 8 à 10, **caractérisé en ce que** l'ablation est effectuée à une vitesse de déplacement du pli par rapport au laser de 10 à 600, de préférence 50 à 350 mm/s.

12. Procédé selon l'une des revendications 8 à 11, **caractérisé en ce qu'**un scanner est associé au laser de manière à déplacer le spot laser pour produire une ligne d'ablation relativement large, telle que de 0,5 à 2 mm de largeur.

13. Application d'un vitrage feuilleté selon l'une des revendications 1 à 7 comme vitrage dégivrant et/ou désembuant utilisant une couche électroconductrice transparente pour un véhicule de transport aérien, terrestre notamment ferroviaire, aquatique notamment marin, blindé civil ou militaire.

## Patentansprüche

1. Verbundverglasung, umfassend, von ihrer ersten Fläche, die dafür bestimmt ist, in Richtung der Außenatmosphäre ausgerichtet zu sein, in Richtung ihrer zweiten Fläche, eine erste Lage mit einer Dicke von 0,5 bis 12 mm, eine erste Strukturlage mit einer Dicke von 3 bis 20 mm, optional eine oder mehrere andere Strukturlagen mit einer Dicke von 3 bis 20 mm, und optional eine zweite Lage mit einer Dicke von 0,5 bis 12 mm, die die zweite Fläche der Verglasung ausmacht, wovon mindestens die Fläche der ersten und/oder der zweiten Lage mit einer Dicke von 0,5 bis 12 mm in Richtung der Strukurlage(n) ausgerichtet ist, und/oder mindestens eine Fläche dieser letzten eine elektrisch leitfähige Schicht mit einer Dicke zwischen 2 und 1600 nm umfasst, außer auf mindestens einer Ablationslinie, **dadurch gekennzeichnet, dass** die Ränder dieser Linie keine Verdickung vorweisen, dass ihre mittlere Neigung höchstens gleich 5 % beträgt, dass die Breite der Ablationslinie zwischen 40 und 250 µm oder zwischen 0,5 und 2 mm beträgt, dass die Verglasung mehrere Ablationslinien mit einer Breite zwischen 40 und 250 µm umfasst, die im Wesentlichen parallel und abstandsgleich sind, und dass der Abstand zwischen zwei dieser angrenzenden Ablationslinien mindestens gleich 8 mm und höchstens gleich 40 und in vorzugsweise aufsteigender Reihenfolge 25 und 20 mm beträgt.

2. Verglasung nach Anspruch 1, **dadurch gekennzeichnet, dass** jede Ablationslinie im Wesentlichen orthogonal zwei Stromzufuhrstreifen schneidet, die entlang von zwei gegenüberliegenden Seiten der Verglasung angeordnet sind, und eine Krümmung und optional eine Biegung vorweist, wenn diese zwei gegenüberliegenden Seiten einen Winkel zwischen sich ausbilden oder wenn die zwei Enden der Ablationslinie einander nicht zugewandt, sondern relativ zueinander versetzt sind.

3. Verglasung nach einem der vorstehenden Ansprüche,
**dadurch gekennzeichnet, dass** die mittlere Neigung der Ränder der Ablationslinie höchstens gleich 2 % beträgt.

4. Verglasung nach einem der vorstehenden Ansprüche,
**dadurch gekennzeichnet, dass** die Lage(n) mit einer Dicke von 0,5 bis 12 mm aus chemisch verstärktem Glas ist (sind).

5. Verglasung nach einem der vorstehenden Ansprüche,
**dadurch gekennzeichnet, dass** die Strukturlage(n) aus thermisch teilvorgespanntem oder chemisch verstärktem Glas oder aus Polymermaterial wie zum Beispiel Poly(methylmethacrylat), Polycarbonat oder Poly(ethylenterephtalat) ist (sind).

6. Verglasung nach einem der vorstehenden Ansprüche,
**dadurch gekennzeichnet, dass** die elektrisch leitfähige Schicht aus einer Schicht von mit Zinn dotiertem Indiumoxid (ITO), mit Fluor dotiertem Zinnoxid (SnO₂: F) oder mit Aluminium dotiertem Zinkoxid (AZO) oder aus einer metallischen Schicht wie zum Beispiel aus Gold oder aus Silber besteht.

7. Verglasung nach einem der vorstehenden Ansprüche,
**dadurch gekennzeichnet, dass** die Lage(n) mit einer Dicke von 0,5 bis 12 mm und die Strukturlage(n) zwei und zwei durch eine Haftzwischenlagenschicht verklebt sind, die jeweils unabhängig voneinander aus einer Schicht von Polyvinylbutyral (PVB), Polyurethan (PU) oder Poly(etyhlenvinylacetat) (EVA) mit einer Dicke von 0,5 bis 20, vorzugsweise 1 bis 16 mm bestehen.

8. Verfahren zum Herstellen einer Verbundverglasung nach einem der vorstehenden Ansprüche, **dadurch gekennzeichnet, dass** mindestens eine Lage mit einer Dicke von 0,5 bis 12 mm oder mindestens eine Strukturlage, deren Fläche eine elektrisch leitfähige Schicht mit einer Dicke zwischen 2 und 1600 nm umfasst, auf der Seite dieser letzten einer Laserablation durch Impulse mit Dauern von höchstens gleich 100 ps unterzogen wird.

9. Verfahren nach Anspruch 8, **dadurch gekennzeichnet, dass** die Impulse Dauern von höchstens gleich 20, vorzugsweise 15 ps besitzen.

10. Verfahren nach einem der Ansprüche 8 oder 9,
**dadurch gekennzeichnet, dass** die Impulse Dauern von mindestens gleich 2, vorzugsweise 5 ps besitzen.

11. Verfahren nach einem der Ansprüche 8 bis 10,
**dadurch gekennzeichnet, dass** die Ablation mit einer Bewegungsgeschwindigkeit der Lage relativ zu dem Laser von 10 bis 600, vorzugsweise 50 bis 350 mm/s erfolgt.

12. Verfahren nach einem der Ansprüche 8 bis 11,
**dadurch gekennzeichnet, dass** ein Scanner so dem Laser zugeordnet ist, dass der Laserspot zum Erzeugen einer relativ breiten Ablationslinie, wie zum Beispiel von 0,5 bis 2 mm Breite, bewegt wird.

13. Anwendung einer Verbundverglasung nach einem der Ansprüche 1 bis 7 als Enteisungs- oder Antibeschlagsverglasung, die eine elektrisch leitfähige transparente Schicht verwendet, für ein Luft-, Land-, insbesondere Schienen-, Wasser-, insbesondere See-, gepanzertes Zivil- oder Militärtransportfahrzeug.

## Claims

1. A laminated glazing comprising, from its first face, which is intended to be oriented toward the exterior atmosphere, to its second face, a first ply of 0.5 to 12 mm thickness, a first structural ply of 3 to 20 mm thickness, optionally one or more other structural plies of 3 to 20 mm thickness, and optionally a second ply of 0.5 to 12 mm thickness forming the second face of the glazing, of which at least the face of the first and/or the second ply of 0.5 to 12 mm thickness, which is oriented toward the structural ply/plies, and/or at least one face of the latter comprises an electrically conductive layer of thickness comprised between 2 and 1600 nm, except on at least one ablation line, **characterized in that** the edges of this line have no hem, **in that** their average slope is at most equal to 5%, **in that** the width of the ablation line is comprised between 40 and 250 µm or between 0.5 and 2 mm, **in that** the glazing comprises a plurality of substantially parallel and equidistant ablation lines of a width comprised between 40 and 250 µm, and **in that** the distance between two of these neighboring ablation lines is at least equal to 8 mm, and at most equal to 40, and in increasing order of preference, 25 and 20 mm.

2. The glazing according to claim 1, **characterized in that** each ablation line cuts, substantially orthogonally, two current supply strips that are placed along two opposite sides of the glazing, and has a curvature and possibly an inflection when these two opposite sides make an angle therebetween or when the two ends of the ablation line do not face each other but are offset from each other.

3. The glazing according to either of the preceding claims, **characterized in that** the average slope of the edges of the ablation line is at most equal to 2%.

4. The glazing according to any of the preceding claims, **characterized in that** the ply/plies of 0.5 to 12 mm thickness is/are made of chemically toughened glass.

5. The glazing according to any of the preceding claims,
**characterized in that** the structural ply/plies is/are made of thermally semi-tempered or chemically toughened glass, or made of a polymer material such as polymethyl methacrylate, polycarbonate or polyethylene terephthalate.

6. The glazing according to any of the preceding claims,
**characterized in that** the electrically conductive layer consists of a layer of tin-doped indium oxide (ITO), of fluorine-doped tin oxide (SnO₂: F) or of aluminum-doped zinc oxide (AZO), or of a metal layer such as of gold or of silver.

7. The glazing according to any of the preceding claims, **characterized in that** the ply/plies of 0.5 to 12 mm thickness and the structural ply/plies are adhesively bonded pairwise via an adhesive interlayer that consists in each case, independently of the others, of a layer of polyvinyl butyral (PVB), polyurethane (PU) or poly(ethylene-vinyl acetate) (EVA) of 0.5 to 20, preferably 1 to 16 mm thickness.

8. A process for manufacturing a laminated glazing according to any of the preceding claims, **characterized in that** at least one ply of 0.5 to 12 mm thickness or at least one structural ply, one face of which comprises an electrically conductive layer of thickness comprised between 2 and 1600 nm, is subjected, on the side of the latter, to pulsed laser ablation with laser pulses of duration at most equal to 100 ps.

9. The process according to claim 8, **characterized in that** the pulses have durations at most equal to 20, preferably 15 ps.

10. The process according to either of claims 8 or 9, **characterized in that** the pulses have durations at most equal to 2, preferably 5 ps.

11. The process according to any of claims 8 to 10, **characterized in that** the ablation is carried out at a rate of movement of the ply with respect to the laser of 10 to 600, preferably 50 to 350 mm/s.

12. The process according to any of claims 8 to 11, **characterized in that** a scanner is associated with the laser so as to move the laser spot in order to produce a relatively wide ablation line, such as of 0.5 to 2 mm width.

13. A use of a laminated glazing according to any of claims 1 to 7 as a defrosting and/or demisting glazing employing an electrically conductive transparent layer, in an air transport vehicle, ground and in particular rail transport vehicle, water and in particular sea transport vehicle, or in an armored military or civil transport vehicle.
